# FASCICULE DE BREVET EUROPEEN

(11) **EP 1 498 624 B1**
(45) Date de publication et mention de la délivrance du brevet: **30.11.2005**
(21) Numéro de dépôt: 04291613.0
(22) Date de dépôt: 25.06.2004
(51) Int. Cl.: F16C 35/063, F16D 1/06

(54) **Dispositif perfectionné de fixation d'un arbre de moteur sur un support de palier**
Vorrichtung zur Fixierung eine Motorenwelle auf einem Lager
Device for fixing a motor shaft onto a bearing support

(30) Priorité: 15.07.2003 FR 0308612
(43) Date de publication de la demande: 19.01.2005
(73) Titulaire: SNECMA, 75015 Paris (FR)
(72) Inventeur: Lejeune, Pascal Michel Daniel, 77210 Samoreau-Avon (FR); Charier, Gilles Alain, 77130 La Grande Paroisse (FR)
(74) Mandataire: Plaçais, Jean Yves

(56) Documents cités:
- EP-A- 0 359 659
- FR-A- 2 633 023
- GB-A- 1 205 199
- US-A- 3 402 750

## Description

L'invention concerne le domaine de la fixation des arbres de moteur sur des supports de palier (ou tourillons), notamment lorsque le moteur est une turbomachine.

Un dispositif de fixation selon le préambule de la revendication 1 est connu du document EP-A-0 359 659.

La fixation (ou l'accouplement) d'un arbre de moteur (ou machine) sur un support de palier est une opération complexe requérant un dispositif dédié. Un tel dispositif comporte généralement, d'une première part, un écrou d'extraction, muni d'un filetage coopérant avec un filetage de l'arbre, d'une deuxième part, un contre-écrou, muni d'un filetage coopérant avec un filetage du support de palier, de manière à immobiliser l'arbre par rapport au palier dans une position choisie, et d'une troisième part, un frein d'écrou destiné à immobiliser l'écrou ou le contre-écrou.

La fixation s'avère d'autant plus difficile que l'espace dans lequel sont implantés l'arbre et le support de palier est exigu et/ou encombré.

L'opération de désaccouplement est encore plus difficile, notamment dans le cas des turbo-machines telles que les turbopropulseurs, du fait que plusieurs arbres sont accouplés à des étages voisins dits de "basse pression (BP)", "de pression intermédiaire (IP)" et de "haute pression (HP)". Plus précisément, dans les turbo-machines actuelles, une fois l'arbre de basse pression enlevé, les vis d'assemblage de l'arbre de pression intermédiaire ne sont pas accessibles. De plus, l'arbre de pression intermédiaire ne pouvant pas être démonté par l'arrière, l'accession à l'étage de haute pression (HP), placé juste après l'étage de pression intermédiaire, requiert le démontage complet du moteur. Du fait du nombre élevé d'éléments à démonter (y compris les réducteurs), les opérations de maintenance et de réparation s'avèrent particulièrement onéreuses.

En outre, les pièces constituant les dispositifs de fixation actuels n'étant pas liées les unes aux autres, la probabilité d'en perdre une à l'intérieur du moteur est relativement élevée.

L'invention a donc pour but de remédier à tout ou partie des inconvénients précités.

Elle propose à cet effet un dispositif dédié à la fixation (ou à l'accouplement) d'un arbre de machine sur un support de palier, comprenant un écrou d'extraction, muni d'un filetage destiné à coopérer avec un premier filetage de l'arbre, et un contre-écrou, muni d'un filetage destiné à coopérer avec un second filetage du support de palier, afin d'immobiliser l'arbre par rapport au palier, dans une position choisie.

Ce dispositif se caractérise, d'une part, par le fait que i) ces premier et second filetages sont inversés l'un par rapport à l'autre, ii) son contre-écrou comporte une butée munie d'une face avant et des premiers moyens de couplage, et iii) son écrou d'extraction comporte des deuxièmes moyens de couplage et une butée munie d'une face avant, destinée à s'appuyer sur une face arrière d'une butée du support de palier pour définir la position choisie, et d'une face arrière, sur laquelle vient abuter la face avant de la butée du contre-écrou lorsqu'il est placé dans une position d'immobilisation. D'autre part, le dispositif se caractérise par le fait qu'il comprend un frein d'écrou muni de troisièmes et quatrièmes moyens de couplage agencés de manière à coopérer respectivement avec les premiers et deuxièmes moyens de couplage afin de coupler en rotation l'écrou et le contre-écrou, une fois qu'ils sont placés dans une position d'immobilisation qui définit la position choisie.

Dans un premier mode de réalisation, le filetage de l'écrou d'extraction est placé sur une face interne de manière à coopérer avec le premier filetage qui est placé sur une face externe de l'arbre.

Le filetage du contre-écrou est alors préférentiellement placé sur une face interne de manière à coopérer avec le second filetage du support de palier, qui est placé sur une face externe.

Par ailleurs, le frein d'écrou est ici préférentiellement monté à translation sur l'écrou d'extraction.

En outre, l'écrou d'extraction peut présenter une partie terminale opposée à sa butée et munie d'au moins deux griffes recourbées vers l'intérieur et constituant ses deuxièmes moyens de couplage. Dans ce cas, le frein d'écrou présente une première partie terminale constituant ses quatrièmes moyens de couplage et agencée de manière à coopérer avec les griffes pour assurer son couplage en rotation à l'écrou d'extraction. La première partie terminale peut alors supporter un circlips de butée destiné à coopérer avec les griffes pour interdire, en cas de démontage, la désolidarisation du frein d'écrou de l'écrou d'extraction. Lesdites griffes peuvent également définir un logement chargé de recevoir des moyens de blocage, comme par exemple un jonc de verrouillage élastique, destinés à placer le frein d'écrou dans sa position d'immobilisation.

De plus, le contre-écrou peut présenter une partie terminale prolongeant la butée du côté opposé à sa face avant et munie de dents constituant les premiers moyens de couplage. Dans ce cas, le frein d'écrou présente une seconde partie terminale munie de dents constituant les troisièmes moyens de couplage et agencées pour coopérer avec les dents du contre-écrou pour assurer son couplage en rotation à ce dernier.

Dans un second mode de réalisation, le filetage de l'écrou d'extraction est placé sur une face externe de manière à coopérer avec le premier filetage qui est placé sur une face interne de l'arbre.

Le filetage du contre-écrou est alors préférentiellement placé sur une face externe de manière à coopérer avec le second filetage du support de palier qui est placé sur une face interne.

Par ailleurs, l'écrou d'extraction présente préférentiellement une première partie terminale munie du filetage externe et une seconde partie terminale opposée à la première partie par rapport à sa butée et munie, sur une face externe, de glissières constituant les deuxièmes moyens de couplage. Le frein d'écrou présente alors une première partie terminale munies de glissières constituant les quatrièmes moyens de couplage et agencées de manière à coopérer avec les glissières de l'écrou d'extraction pour assurer son couplage en rotation à ce dernier.

En outre, le contre-écrou peut présenter une partie terminale opposée à sa butée et comprenant une face interne munie de glissières constituant les premiers moyens de couplage. Dans ce cas, le frein d'écrou présente une première partie terminale munie, sur une face externe, de glissières constituant les troisièmes moyens de couplage et agencées pour coopérer avec les glissières du contre-écrou pour assurer son couplage en rotation à ce dernier. La première partie du frein d'écrou peut alors être agencée de manière à être introduite par translation entre la première partie terminale de l'écrou d'extraction et la partie terminale du contre-écrou.

De plus, le frein d'écrou peut également comporter une seconde partie terminale opposée à sa première partie terminale et munie d'au moins une butée de blocage destinée à coopérer avec un circlips monté sur le support de palier pour bloquer sa course en cas de démontage.

Le frein d'écrou peut également comporter, sur une face externe, une gorge recevant un anneau élastique de blocage destiné à coopérer avec une gorge formée dans une face interne du support de palier afin de placer le frein d'écrou dans sa position d'immobilisation.

Le dispositif selon l'invention est particulièrement bien adapté, bien que de façon non exclusive, à la solidarisation d'un arbre de turbomachine à un support de palier, en particulier lorsque la turbomachine est un turbopropulseur.

D'autres caractéristiques et avantages de l'invention apparaîtront à l'examen de la description détaillée ci-après, et des dessins annexés, sur lesquels :
- la figure 1 est une vue en coupe longitudinale, schématique, d'une partie des étages de basse pression, de pression intermédiaire et de haute pression d'un turbopropulseur,
- la figure 2 illustre de façon schématique, dans une vue en coupe longitudinale, en perspective, un premier exemple de réalisation d'un dispositif de fixation selon l'invention, dans un état d'immobilisation,
- la figure 3 illustre de façon schématique, dans une vue en coupe longitudinale, en perspective, l'état du dispositif de fixation de la figure 2 après extraction du jonc d'immobilisation et dévissage de l'écrou d'extraction à l'aide d'un premier outil dédié,
- la figure 4 illustre de façon schématique, dans une vue en perspective, un deuxième outil permettant d'extraire le jonc élastique d'immobilisation du dispositif de la figure 2,
- la figure 5 illustre de façon schématique, dans une vue en coupe longitudinale, un second exemple de réalisation d'un dispositif de fixation selon l'invention, dans un état d'immobilisation,
- la figure 6 illustre de façon schématique, dans une vue en coupe longitudinale, l'état du dispositif de fixation de la figure 5 après dégagement du frein d'écrou et dévissage de l'écrou d'extraction à l'aide d'un outil dédié, et
- la figure 7 illustre de façon schématique, dans une vue en perspective, une variante d'outil permettant de translater le frein d'écrou et d'entraîner en rotation l'écrou d'extraction du second exemple de réalisation du dispositif selon l'invention, adapté à l'accouplement d'un arbre et d'un support de palier du corps haute pression (HP).

Les dessins annexés pourront non seulement servir à compléter l'invention, mais aussi contribuer à sa définition, le cas échéant.

L'invention porte sur un dispositif de fixation (ou d'accouplement) d'un arbre de moteur (ou machine) sur un support de palier (ou tourillon). Dans ce qui suit, il sera fait référence à un arbre d'une turbomachine, comme par exemple un turbopropulseur d'avion. Mais, bien entendu, l'invention n'est pas limitée à ce seul type de machine.

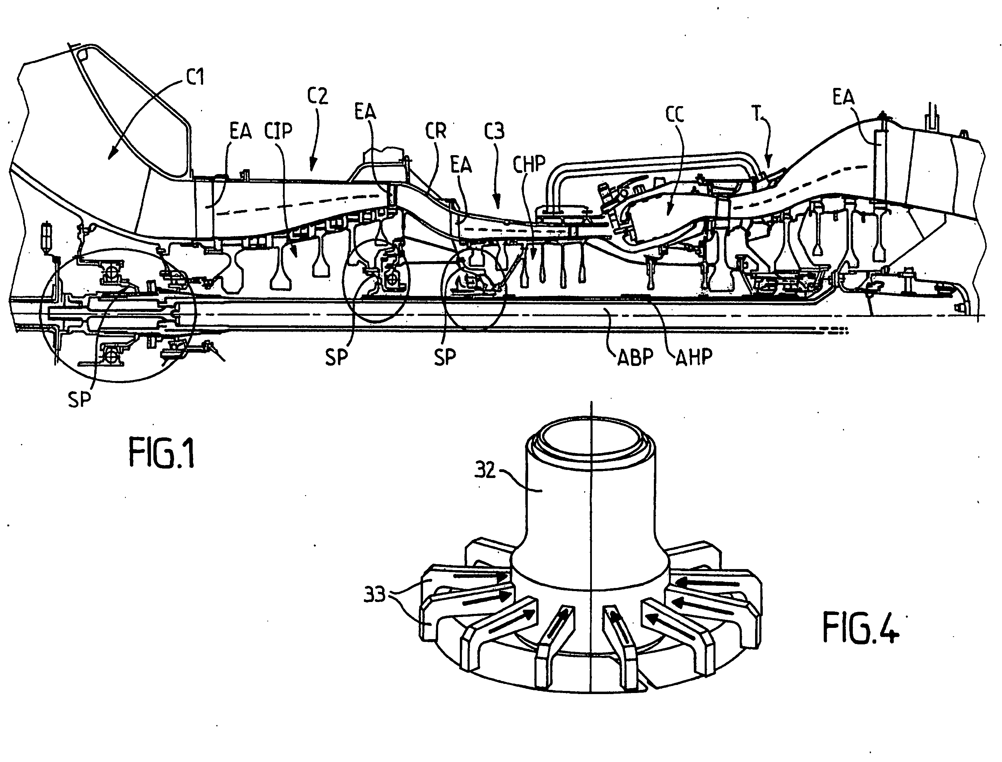

On se réfère tout d'abord à la figure 1 pour préciser le lieu d'implantation d'un dispositif de fixation selon l'invention dans le cadre de l'exemple d'application précité.

Un turbopropulseur peut comprendre deux ou trois corps (ou étages) placés les uns à la suite des autres. Un premier corps C1 dit "basse pression (BP)" (partiellement représenté), a pour fonction d'aspirer l'air extérieur à l'aide d'une hélice (non représentée), puis de le "pré-comprimer" à l'aide d'un premier compresseur CBP. Un deuxième corps C2 dit "de pression intermédiaire (IP)", a pour fonction de comprimer l'air pré-comprimé par le premier corps C1, à l'aide d'un second compresseur CIP. Un troisième corps C3 dit "haute pression (HP)", a pour fonction de "sur-comprimer" l'air comprimé par le deuxième corps C2, à l'aide d'un troisième compresseur CHP, avant qu'il ne pénètre dans une chambre de combustion CC.

Pour ce faire, chaque compresseur (BP, IP ou HP) comprend plusieurs étages d'ailettes EA entraînés en rotation, en même temps que l'hélice par un arbre A, entraîné par une turbine T placée en aval de la chambre de combustion CC. Les ailettes EA sont par ailleurs logées dans un espace délimité par un carter CR.

Afin de pouvoir entraîner les ailettes EA d'un corps Ci, l'arbre A correspondant doit être couplé à ce corps Ci par l'intermédiaire d'un dispositif de fixation Di. Plus précisément, chaque corps Ci comprend un support de palier (ou tourillon) SP auquel est couplé l'arbre A par l'intermédiaire d'un dispositif de fixation Di. Sur la figure 1 les trois zones de couplage sont encerclées.

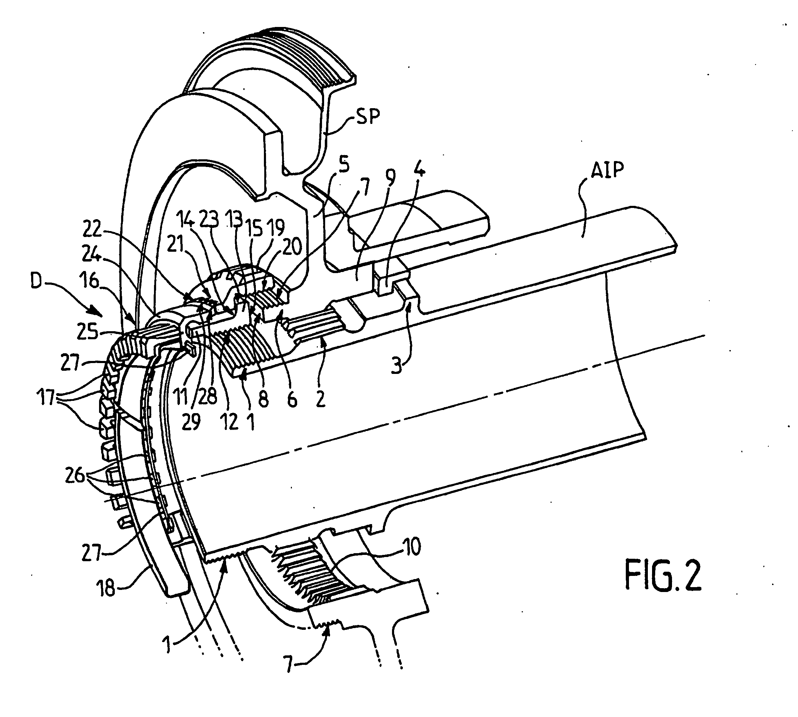

On se réfère maintenant à la figure 2 pour décrire un premier exemple de réalisation d'un dispositif de fixation D selon l'invention, destiné à coupler un arbre de pression intermédiaire AIP à un support de palier SP du deuxième corps C2 (ou corps de pression intermédiaire) d'un turbopropulseur.

Dans ce qui suit, on définit quatre directions par rapport à la cavité centrale du turbopropulseur, dans laquelle est logé l'arbre AIP. Une direction dite "interne" est orientée vers l'intérieur de la cavité. Une direction dite "externe" est orientée vers l'extérieur de la cavité. Une direction dite "avant" est orientée vers une partie aval du turbopropulseur, relativement à l'écoulement du flux d'air. Une direction dite "arrière" est orientée vers une partie amont du turbopropulseur, relativement à l'écoulement du flux d'air.

Le dispositif D est ici adapté à un arbre AIP comportant sur une face externe, d'une part, un premier filetage 1, et d'autre part, légèrement en aval dudit premier filetage 1 et sensiblement perpendiculairement à celui-ci, des glissières (ou cannelures) 2. Préférentiellement, l'arbre AIP comporte également, sur sa face externe, légèrement en aval des glissières 2, une butée 3, s'étendant de préférence sur toute la circonférence de l'arbre et destinée à coopérer avec une cale de réglage 4.

Par ailleurs, l'arbre AIP et le dispositif D sont adaptés à un support de palier (ou tourillon) SP comportant une partie centrale 5 en forme de disque, évidé au centre pour permettre le passage de l'arbre AIP et sur la face arrière duquel fait saillie une partie arrière 6 sensiblement cylindrique circulaire pourvue sur une face externe d'un second filetage 7 et terminée par une face arrière de butée 8.

Selon l'invention, les premier 1 et second 7 filetages sont inversés l'un par rapport à l'autre.

Par ailleurs, sur une face avant de la partie centrale 5 fait saillie une partie avant 9, de préférence sensiblement cylindrique circulaire, et terminée par une face destinée à s'appuyer contre une face arrière de la cale de réglage 4. En outre, la partie centrale 5 comporte sur une face interne, sensiblement entre les parties arrière 6 et avant 9, des glissières 10, sensiblement perpendiculaires au second filetage 7 et destinées à coopérer avec les glissières 2 de l'arbre AIP lorsque ce dernier se déplace en translation par rapport au support de palier SP pendant les phases d'accouplement et de désaccouplement.

Le dispositif de fixation D comporte tout d'abord, un écrou d'extraction (et de serrage) 11 comportant une partie centrale munie sur une face interne d'un filetage 12, destiné à coopérer avec le premier filetage 1 de l'arbre AIP. La partie centrale est prolongée par une partie terminale avant définissant une butée 13, de préférence circulaire et munie d'une face arrière 14 et d'une face avant 15 destinée à s'appuyer sur la face arrière de butée 8 de la partie arrière 6 du support de palier SP. Par ailleurs, la partie centrale est également prolongée par une partie terminale arrière 16 définissant des moyens de couplage 17.

Les moyens de couplage 17 sont ici préférentiellement réalisés sous la forme d'une multiplicité de griffes recourbées vers l'intérieur et espacées régulièrement les unes des autres. Ces griffes s'étendent sur une longueur choisie de manière à définir un espace propre à recevoir un moyen de blocage (ou verrouillage) 18, ici préférentiellement réalisé sous la forme d'un jonc élastique (fendu).

Le dispositif de fixation D comporte également un contre-écrou 19 comportant une partie principale munie sur une face interne d'un filetage 20, destiné à coopérer avec le second filetage 7 du support de palier SP, et terminée par une face avant de butée destinée à s'appuyer sur la partie centrale 5 dudit support de palier SP. Cette partie principale est ici prolongée par une partie d'extrémité 21 dans une partie arrière de laquelle sont définis des moyens de couplage 22 et dont une partie avant définit une face avant de butée 23 destinée à s'appuyer sur la face arrière 14 de la butée 13 de l'écrou d'extraction 11.

Les moyens de couplage 22 sont ici préférentiellement réalisés sous la forme d'une multiplicité de dents sensiblement parallèles à l'arbre AIP.

Le dispositif de fixation D comporte en outre un frein d'écrou 24 monté à translation sur l'écrou d'extraction 11. Le frein d'écrou 24 comporte une première partie terminale (arrière) 25 définissant des moyens de couplage 26 agencés de manière à coopérer avec les griffes 17 pour assurer son couplage à l'écrou d'extraction 11. Préférentiellement, les moyens de couplage 26 constituent un peigne dont les dents sont espacées d'une distance égale, par valeur inférieure, à la distance séparant les griffes 17. Une telle coopération entre moyens de couplage 17 et 26 permet de coupler en rotation l'écrou d'extraction 11 et le frein d'écrou 24.

Préférentiellement, les extrémités des dents du peigne 26 supportent un circlips de butée 27 destiné à coopérer avec les extrémités recourbées des griffes 17 pour interdire, lors du démontage, la désolidarisation du frein d'écrou 24 de l'écrou d'extraction 11.

Le frein d'écrou 24 comporte également une seconde partie terminale (avant) 28 munie de moyens de couplage 29 agencés pour coopérer avec les dents 22 du contre-écrou 19 pour assurer le couplage avec ce dernier.

Préférentiellement, les moyens de couplage 29 sont réalisés sous la forme d'une multiplicité de dents sensiblement parallèles à l'arbre AIP, et de pas sensiblement identique à celui des dents 22 du contre-écrou 19. Une telle coopération entre moyens de couplage 22 et 29 permet de coupler en rotation le contre-écrou 19 et le frein d'écrou 24.

Par ailleurs, cette double coopération des différents moyens de couplage permet de coupler en rotation l'écrou d'extraction 11 et le contre-écrou 19, une fois qu'ils sont placés dans une position d'immobilisation. Ainsi, tout entraînement en rotation de l'écrou d'extraction 11 ou du contre-écrou 19 est interdit par le contre-écrou 19 ou l'écrou d'extraction 11 du fait que les premier 1 et second 7 filetages sont inversés.

L'accouplement de l'arbre AIP au support de palier SP s'effectue comme indiqué ci-après.

Tout d'abord, on installe le contre-écrou 19 et son frein d'écrou 24 sur l'écrou d'extraction 11. Pour ce faire, on introduit les dents du peigne 26, du frein d'écrou 24, entre les griffes 17 de l'écrou d'extraction 11, et on fixe le circlips 27 à l'extrémité des dents du peigne 26.

Puis, on bloque définitivement le contre-écrou 19 sur le second filetage 7 de la partie centrale 5 du support de palier SP.

On translate ensuite l'arbre AIP dans la cavité centrale du turbopropulseur, de l'aval vers l'amont, jusqu'à ce que son premier filetage 1 dépasse légèrement de la face arrière de butée 8 du support de palier SP.

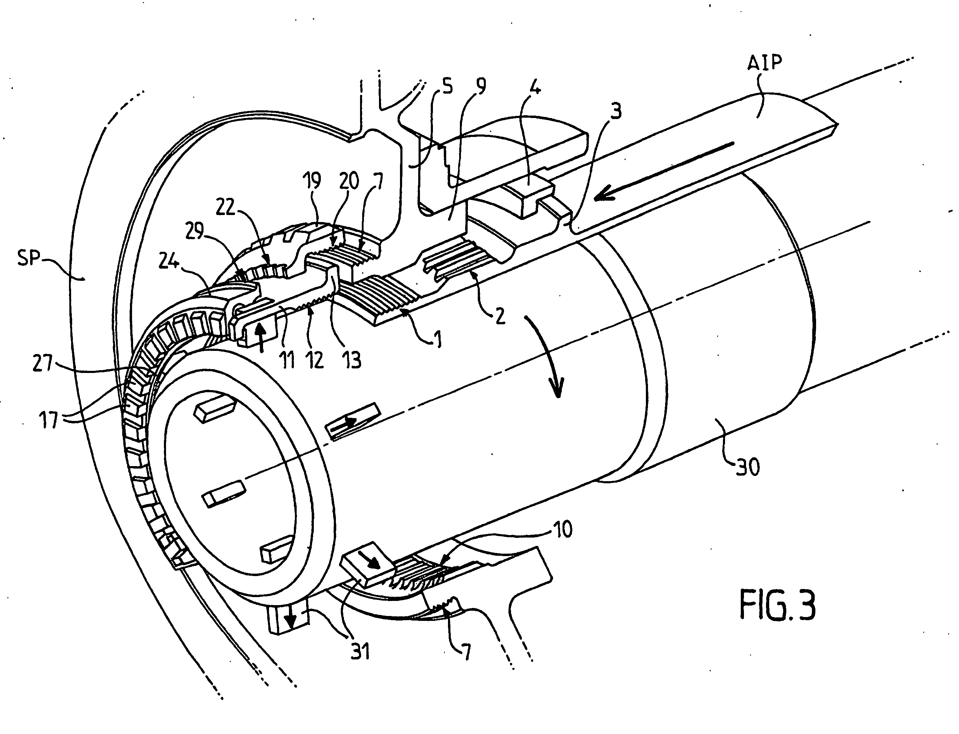

On visse alors l'écrou extracteur 11 équipé de son frein d'écrou 24 sur le premier filetage 1 de l'arbre AIP à l'aide d'un premier outil 30, comme illustré sur la figure 3. Ce premier outil 30 est préférentiellement de type télescopique et muni sur sa partie terminal arrière (ou amont) de plots 31 rétractables radialement à distance et destinés à venir se loger entre des paires de griffes adjacentes 17.

On contraint ainsi l'écrou d'extraction 11 à se translater jusqu'à la mise en appui de la face avant 15 de sa butée 13 sur la face arrière de la butée 8 du support de palier SP. Pendant ces premières opérations, le frein d'écrou 24 n'est pas couplé au contre-écrou 19.

Une fois l'écrou d'extraction 11 quasiment placé dans sa position d'immobilisation, on finit de le visser à l'aide du premier outil dédié 30. Cela provoque la translation de l'arbre AIP par rapport au support de palier SP. Les glissières 2 et 10 de l'arbre AIP et du support de palier SP coopèrent alors, initiant ainsi leur accouplement. Le vissage prend fin lorsque la face avant de butée de la partie avant 9 du support de palier SP s'appuie sur la face arrière de la cale de réglage 4 et que dans le même temps la face avant de la cale de réglage 4 s'appuie sur la face arrière de la butée 3 de l'arbre AIP.

Il ne reste plus alors qu'à translater vers l'aval le frein d'écrou 24 sur l'écrou d'extraction 11 jusqu'à ce que les dents 29 du frein d'écrou 24 coopèrent intimement avec les dents 22 du contre-écrou 19. Cela libère un espace au niveau des griffes 17 de l'écrou d'extraction 11 et permet de coupler en rotation le contre-écrou 19 et le frein d'écrou 24, et par conséquent le contre-écrou 19 et l'écrou d'extraction 11.

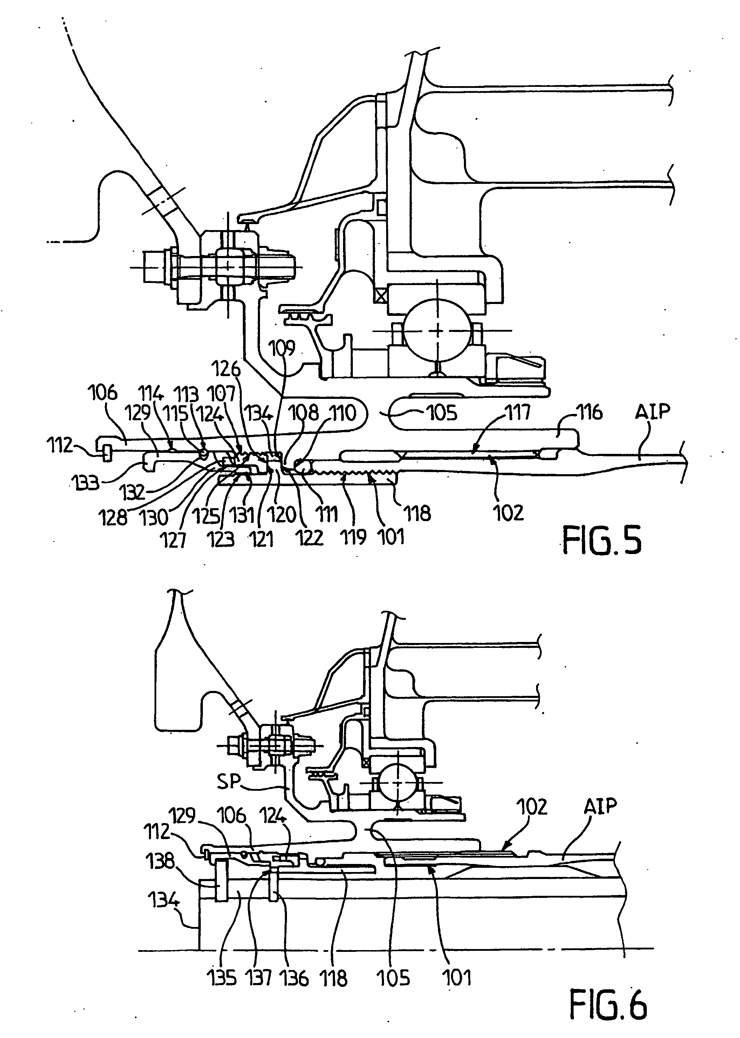

Puis, pour immobiliser définitivement en translation l'ensemble du dispositif D, on introduit dans l'espace libéré, à l'aide d'un second outil dédié 32 du type de celui illustré sur la figure 4, le jonc élastique fendu 18. Ce second outil 32 est préférentiellement de type télescopique et muni sur sa partie terminal arrière (ou amont) de griffes 33 rétractables radialement à distance et destinées à venir se loger à l'intérieur du jonc élastique 18 pour en faire varier le diamètre.

Le frein d'écrou 24 ne pouvant plus se déplacer en translation, l'écrou d'extraction 11 et le contre-écrou 19 sont alors immobilisés et s'interdisent mutuellement tout entraînement en rotation du fait de leurs filetages 12 et 20 inversés. Le dispositif de fixation D, l'arbre AIP et le support de palier SP sont alors placés dans une position finale d'utilisation, illustrée sur la figure 2.

Le désaccouplement de l'arbre AIP au support de palier SP s'effectue en reproduisant sensiblement, dans un ordre inversé, les étapes d'accouplement précédemment décrites. On procède tout d'abord au retrait du jonc élastique 18, à l'aide du second outil 32. Puis, on translate le frein d'écrou 24 vers l'amont jusqu'à ce que le circlips 27 soit au contact des extrémités recourbées des griffes 17. Cela permet de désaccoupler l'écrou d'extraction 11 du contre-écrou 19. On introduit alors le premier outil 30 dans l'arbre AIP puis on introduit ses plots 31 entre les griffes 17 de l'écrou d'extraction 11. On peut alors dévisser l'écrou d'extraction à l'aide dudit premier outil 30, ce qui contraint l'arbre AIP à se translater vers l'aval par rapport au support de palier SP. Le désaccouplement est alors effectif une fois que les glissières 2 et 10 de l'arbre AIP et du support de palier SP ne coopèrent plus.

On se réfère maintenant aux figures 5 et 6 pour décrire un second exemple de réalisation d'un dispositif de fixation selon l'invention.

Le dispositif D est ici adapté à un arbre de pression intermédiaire AIP comportant, d'une part, sur une face interne un premier filetage 101, et d'autre part sur face externe, légèrement en aval dudit premier filetage 101 et sensiblement perpendiculairement à celui-ci, des glissières (ou cannelures) 102.

Par ailleurs, l'arbre AIP et le dispositif D sont adaptés à un support de palier (ou tourillon) SP comportant une partie centrale 105, évidée au centre pour permettre le passage de l'arbre AIP et sur la face arrière de laquelle fait saillie une partie arrière 106 sensiblement cylindrique circulaire pourvue sur une face interne d'un second filetage 107 et, légèrement en aval de ce second filetage 107, d'une butée 108 comportant une face arrière 109 et une face avant 110 destinée à venir s'appuyer sur une face arrière d'une cale de réglage 111, dont une face avant sert de butée à l'arbre AIP. L'extrémité amont de la partie arrière 106 porte un circlips 112 de limitation de course. Par ailleurs, on prévoit, en deux endroits choisis de la partie arrière 106, entre le circlips 112 et le second filetage 107, deux gorges 113 et 114 destinées à recevoir un anneau ressort d'immobilisation 115, comme on le verra plus loin.

Selon l'invention, les premier 101 et second 107 filetages sont également inversés l'un par rapport à l'autre.

Par ailleurs, sur une face avant de la partie centrale 105 fait saillie une partie avant 116, de préférence sensiblement cylindrique circulaire, et comportant sur une face interne des glissières (ou cannelures) 117 de guidage destinées à coopérer avec les glissières 102 de l'arbre AIP lorsque ce dernier se déplace en translation par rapport au support de palier SP, pendant les phases d'accouplement et de désaccouplement.

Le dispositif de fixation D comporte tout d'abord, un écrou d'extraction (et de serrage) 118 comportant une partie avant munie sur une face externe d'un filetage 119, destiné à coopérer avec le premier filetage 101 de l'arbre AIP. La partie avant est prolongée par une partie centrale comportant, sur une face externe, une butée 120, de préférence circulaire et munie d'une face arrière 121 et d'une face avant 122 destinée à s'appuyer sur la face arrière de butée 109 de la butée 108 de la partie arrière 106 du support de palier SP. Par ailleurs, la partie centrale est prolongée par une partie terminale arrière sur la face externe de laquelle sont définis des moyens de couplage 123. Ces moyens de couplage 123 sont ici préférentiellement réalisés sous la forme d'une multiplicité de glissières (ou cannelures) sensiblement perpendiculaires au filetage 119.

Le dispositif de fixation D comporte également un contre-écrou 124 comportant une partie principale munie sur une face externe d'un filetage 125, destiné à coopérer avec le second filetage 107 du support de palier SP, et terminée par une face avant de butée 126 destinée à s'appuyer sur la face arrière 121 de la butée 120 de l'écrou d'extraction 118. Cette partie principale comporte également sur une face interne des moyens de couplage 127. Ces moyens de couplage 127 sont ici préférentiellement réalisés sous la forme d'une multiplicité de glissières sensiblement perpendiculaires au filetage 125.

La partie principale est par ailleurs prolongée par une partie d'extrémité amont 128 définissant une face arrière de couplage.

Le dispositif de fixation D comporte en outre un frein d'écrou 129 comportant une première partie terminale (avant) 130 destinée à être introduite, par translation, entre la face interne du contre-écrou 129 et la face externe de l'écrou d'extraction 118. Cette partie terminale 130 comporte une face interne sur laquelle sont définis des moyens de couplage 131 agencés de manière à coopérer avec les glissières 123 de l'écrou d'extraction 118 pour assurer leur couplage. Préférentiellement, les moyens de couplage 131constituent des glissières (ou cannelures). Une telle coopération entre moyens de couplage 123 et 131 permet de coupler en rotation l'écrou d'extraction 118 et le frein d'écrou 129.

Par ailleurs, cette partie terminale 130 comporte également une face externe sur laquelle sont définis des moyens de couplage (non représentés pour des questions d'encombrement) et destinés à coopérer avec les glissières 127 du contre-écrou 124 pour assurer leur couplage. Préférentiellement, les moyens de couplage constituent des glissières (ou cannelures). Une telle coopération entre moyens de couplage 127 permet de coupler en rotation le contre-écrou 124 et le frein d'écrou 129.

La double coopération assurée par les différents moyens de couplage permet de coupler en rotation l'écrou d'extraction 118 et le contre-écrou 124, une fois qu'ils sont placés dans une position d'immobilisation. Ainsi, tout entraînement en rotation de l'écrou d'extraction 118 ou du contre-écrou 124 est interdit par le contre-écrou 124 ou l'écrou d'extraction 118 du fait que les premier 101 et second 107 filetages sont inversés.

La partie terminale 130 est prolongée par une partie centrale sur la face externe de laquelle est définie une gorge circulaire 132 destinée à recevoir l'anneau-ressort 115. Cet anneau-ressort 115 est destiné, lorsqu'il est en partie logé dans la première gorge 113 du support de palier SP, à interdire toute translation du frein d'écrou 129. Par ailleurs, lorsque l'anneau-ressort 115 est en partie logé dans la seconde gorge 114 du support de palier SP (voir figure 6), il permet l'immobilisation du frein d'écrou 129 dans une position d'attente dans laquelle les écrou d'extraction 118 et contre-écrou 124 sont découplés.

La partie centrale est elle-même prolongée par une partie d'extrémité 133 définissant une butée destinée à s'appuyer contre le circlips 112 porté par le support de palier SP, de manière à limiter la course du frein d'écrou 129 et à définir sa position d'attente.

Préférentiellement, le dispositif de fixation D comporte également une entretoise 134 intercalée entre une face aval de la butée 120 de l'écrou d'extraction 118 et la face amont de la partie arrière 106 du support de palier SP. Cela permet de créer un jeu facilitant le vissage et le dévissage de l'écrou d'extraction 118.

Il est important de noter que l'entretoise 134 peut être formée dans une partie de la face avant de butée 126.

L'accouplement de l'arbre AIP au support de palier SP s'effectue comme indiqué ci-après.

Tout d'abord, on introduit l'écrou extracteur 118, en interposant l'entretoise 134, de sorte que la face avant 122 de sa butée 120 s'appuie sensiblement sur la face arrière de butée 109 de la butée 108 du support de palier SP.

Puis, on introduit le contre-écrou 124 et on le visse jusqu'à ce que sa face avant de butée 126 vienne s'appuyer sensiblement sur la face arrière de l'entretoise 134, ou bien sur la face arrière 109 de la butée 108 du support de palier SP lorsque l'entretoise 134 fait partie intégrante de la face avant de butée 126. On monte ensuite le frein d'écrou 129 en position d'attente arrière, puis on monte le circlips 112 (ici réalisé sous la forme d'un anneau élastique).

On translate ensuite l'arbre AIP dans la cavité centrale du turbopropulseur, de l'aval vers l'amont, jusqu'à ce que son premier filetage 101 atteigne le filetage 119 de l'écrou d'extraction 118. Puis, on visse l'écrou d'extraction 118 sur le premier filetage 101, à l'aide d'un outil 134, illustré sur la figure 6. Cet outil 134 est préférentiellement de type télescopique et muni sur une partie terminale arrière (ou amont) 135 d'une série de plots 136 rétractables radialement à distance et destinés à venir se loger dans des ouvertures 137 définies dans la partie terminale arrière de l'écrou d'extraction 118.

Pendant le vissage, les glissières 101 et 119 du support de palier SP et de l'écrou d'extraction 118 coopèrent ensemble pour guider la translation de l'arbre AIP vers l'amont. Le vissage prend fin lorsque la face arrière de l'arbre AIP s'appuie sur la face avant de la cale de réglage 111.

Il ne reste plus alors qu'à translater le frein d'écrou 129 vers l'aval, à l'aide de l'outil 134, de sorte que sa partie terminale (avant) 130 pénètre entre la face interne du contre-écrou 129 et la face externe de l'écrou d'extraction 118. Cet translation est rendue possible par un ou plusieurs plots 137 rétractables radialement à distance, installés dans la partie terminale arrière 135 de l'outil 134.

La coopération des différentes glissières assure alors le couplage en rotation de l'écrou d'extraction 118 et du contre-écrou 124, via le frein d'écrou 129, avec le support de palier SP.

Lorsque l'anneau-ressort 115 parvient dans la première gorge 113, le frein d'écrou 129 est alors placé dans une position d'immobilisation dans laquelle il interdit toute translation de l'écrou d'extraction 118 et du contre-écrou 124. L'écrou d'extraction 118 et le contre-écrou 124 s'interdisent alors mutuellement tout entraînement en rotation du fait de leurs filetages 119 et 127 inversés. Le dispositif de fixation D, l'arbre AIP et le support de palier SP sont alors placés dans une position finale d'utilisation, illustrée sur la figure 5.

Le désaccouplement de l'arbre AIP du support de palier SP s'effectue en reproduisant sensiblement, dans un ordre inversé, les étapes d'accouplement précédemment décrites. On procède tout d'abord au retrait par translation du frein d'écrou 129, à l'aide des plots 138 de l'outil 134. Une fois le frein d'écrou 129 immobilisé dans sa position d'attente (en butée contre le circlips 112 et son anneau-ressort 115 logé partiellement dans la seconde gorge 114 du support de palier SP),on introduit les plots 136 de l'outil 134 dans les ouvertures 137 de l'écrou d'extraction 118, puis on dévisse l'écrou d'extraction en entraînant en rotation ledit outil 134. Cela contraint l'arbre AIP à se translater vers l'aval par rapport au support de palier SP. Le désaccouplement est alors effectif une fois que les glissières 102 et 117 de l'arbre AIP et du support de palier SP ne coopèrent plus, comme illustré sur la figure 6.

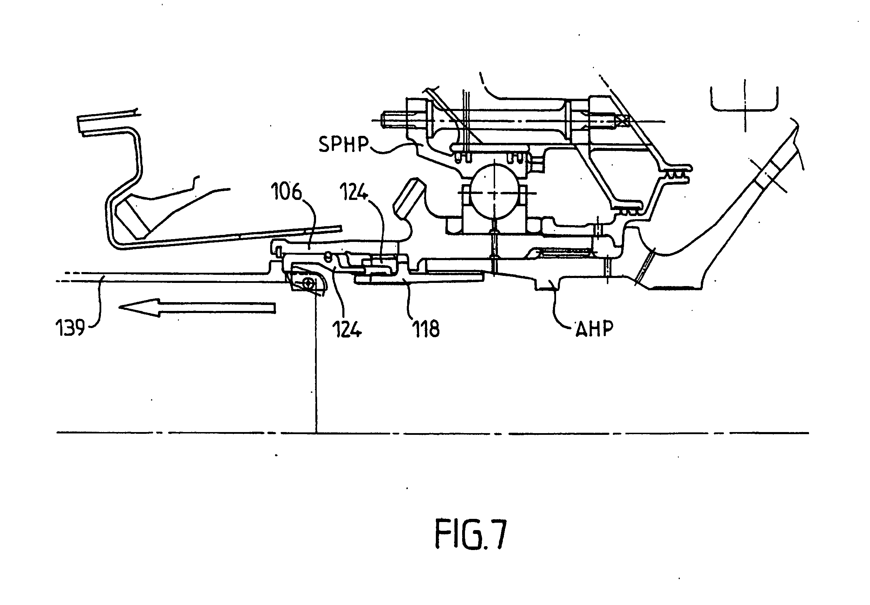

Dans ce qui précède, il a été décrit un mode d'accouplement et de désaccouplement effectué par introduction d'un outil de l'aval vers l'amont. Mais, on peut également introduire l'outil de l'amont vers l'aval. Par ailleurs, d'autres types d'outils peuvent être envisagés, comme par exemple une clé 139, dite à créneau, du type de celle illustrée sur la figure 7. Cette clé 139 est plus particulièrement adaptée à l'accouplement/désaccouplement d'un arbre haute pression AHP et d'un support de palier SPHP d'un corps haute pression CHP de turbopropulseur.

Par ailleurs, le dispositif de fixation selon l'invention est adapté à l'accouplement d'un arbre sur un support de palier appartenant non seulement à un corps intermédiaire ou un corps haute pression, comme décrit précédemment en référence aux figures 2 à 7, mais également à un corps basse pression.

L'invention ne se limite pas aux modes de réalisation de dispositif de fixation décrits ci-avant, seulement à titre d'exemple, mais elle englobe toutes les variantes que pourra envisager l'homme de l'art dans le cadre des revendications ci-après.

## Revendications

1. Dispositif (D) de fixation d'un arbre (AIP) de machine sur un support de palier (SP), comprenant un écrou d'extraction (11,118) muni d'un filetage (12,119) propre à coopérer avec un premier filetage (1,101) dudit arbre (AIP) et un contre-écrou (19,124) muni d'un filetage (20,125) propre à coopérer avec un second filetage (7,107) dudit support de palier (SP), de manière à immobiliser ledit arbre par rapport audit support de palier dans une position choisie, **caractérisé en ce que** :
* lesdits premier (1,101) et second (7,107) filetages sont inversés l'un par rapport à l'autre,
* ledit contre-écrou (19,124) comporte une butée munie d'une face avant (23,126) et des premiers moyens de couplage (22,127),
* ledit écrou d'extraction (11,118) comporte des deuxièmes moyens de couplage (17,123) et une butée (13,120) munie d'une face avant (15,122), destinée à s'appuyer sur une face arrière d'une butée (8,108) dudit support de palier (SP) pour définir ladite position choisie, et d'une face arrière, sur laquelle vient abuter ladite face avant (23,126) de la butée du contre-écrou (19,124) lorsqu'il est placé dans une position d'immobilisation,
et **en ce qu'**il comprend un frein d'écrou (24,129) muni de troisièmes (29) et quatrièmes (26,131) moyens de couplage agencés pour coopérer respectivement avec lesdits premiers (22,127) et deuxièmes (17,123) moyens de couplage de manière à coupler en rotation ledit écrou d'extraction (11,118) et ledit contre-écrou (19,124), une fois placés dans une position d'immobilisation définissant ladite position choisie.

2. Dispositif selon la revendication 1, **caractérisé en ce que** ledit filetage (12) de l'écrou d'extraction (11) est placé sur une face interne de manière à coopérer avec ledit premier filetage (1) placé sur une face externe de l'arbre (AIP).

3. Dispositif selon la revendication 2, **caractérisé en ce que** ledit filetage (20) du contre-écrou (19) est placé sur une face interne de manière à coopérer avec ledit second filetage (7) du support de palier (SP) placé sur une face externe.

4. Dispositif selon l'une des revendications 2 et 3, **caractérisé en ce que** ledit frein d'écrou (24) est monté à translation sur ledit écrou d'extraction (11).

5. Dispositif selon l'une des revendications 2 à 4, **caractérisé en ce que** ledit écrou d'extraction (11) présente une partie terminale (16) opposée à ladite butée (13) et munie d'au moins deux griffes (17) recourbées vers l'intérieur et constituant lesdits deuxièmes moyens de couplage, et **en ce que** ledit frein d'écrou (24) présente une première partie terminale (25) constituant lesdits quatrièmes moyens de couplage (26) et agencée de manière à coopérer avec lesdites griffes (17) pour assurer son couplage en rotation audit écrou d'extraction (11).

6. Dispositif selon la revendication 5, **caractérisé en ce que** ladite première partie terminale (25) supporte un circlips de butée (27) destiné à coopérer avec lesdites griffes (17) pour interdire, en cas de démontage, la désolidarisation du frein d'écrou (24) de l'écrou d'extraction (11).

7. Dispositif selon l'une des revendications 5 et 6, **caractérisé en ce que** lesdites griffes (17) définissent un logement propre à recevoir des moyens de blocage (18) destinés à placer ledit frein d'écrou (24) dans sa position d'immobilisation.

8. Dispositif selon la revendication 7, **caractérisé en ce que** lesdits moyens de blocage (18) sont réalisés sous forme d'un jonc de verrouillage élastique.

9. Dispositif selon l'une des revendications 2 à 8, **caractérisé en ce que** ledit contre-écrou (19) présente une partie terminale (21) prolongeant ladite butée du côté opposé à sa face avant (23) et munie de dents (22) constituant lesdits premiers moyens de couplage, et **en ce que** ledit frein d'écrou (24) présente une seconde partie terminale (28) munie de dents (29) constituant lesdits troisièmes moyens de couplage et agencées pour coopérer avec les dents (22) dudit contre-écrou (19) pour assurer son couplage en rotation audit contre-écrou (19).

10. Dispositif selon la revendication 1, **caractérisé en ce que** ledit filetage (119) de l'écrou d'extraction (118) est placé sur une face externe de manière à coopérer avec ledit premier filetage (101) placé sur une face interne de l'arbre (AIP).

11. Dispositif selon la revendication 10, **caractérisé en ce que** ledit filetage (125) du contre-écrou (124) est placé sur une face externe de manière à coopérer avec ledit second filetage (107) du support de palier (SP) placé sur une face interne.

12. Dispositif selon l'une des revendications 10 et 11, **caractérisé en ce que** ledit écrou d'extraction (118) présente une première partie terminale munie dudit filetage externe (119) et une seconde partie terminale opposée à ladite première partie par rapport à la butée (120) et munie sur une face externe de glissières (123) constituant lesdits deuxièmes moyens de couplage, et **en ce que** ledit frein d'écrou (129) présente une première partie terminale (127) munies de glissières (131) constituant lesdits quatrièmes moyens de couplage et agencées de manière à coopérer avec lesdites glissières (123) de l'écrou d'extraction (118) pour assurer son couplage en rotation audit écrou d'extraction (118).

13. Dispositif selon l'une des revendications 10 à 12, **caractérisé en ce que** ledit contre-écrou (124) présente une partie terminale opposée à ladite butée (126) et comprenant une face interne munie de glissières (127) constituant lesdits premiers moyens de couplage, et **en ce que** ledit frein d'écrou (129) présente une première partie terminale (130) munie, sur une face externe, de glissières constituant lesdits troisièmes moyens de couplage et agencées pour coopérer avec les glissières (127) dudit contre-écrou (124) pour assurer son couplage en rotation audit contre-écrou (124).

14. Dispositif selon l'une des revendications 12 et 13, **caractérisé en ce que** ladite première partie (130) du frein d'écrou (129) est agencée de manière à être introduite par translation entre ladite première partie terminale dudit écrou d'extraction (118) et la partie terminale dudit contre-écrou (124).

15. Dispositif selon l'une des revendications 12 à 14, **caractérisé en ce que** ledit frein d'écrou (129) comporte une seconde partie terminale opposée à ladite première partie terminale (130) et munie d'au moins une butée de blocage (133) destinée à coopérer avec un circlips (112) monté sur ledit support de palier (SP) pour bloquer sa course en cas de démontage.

16. Dispositif selon l'une des revendications 10 à 15, **caractérisé en ce que** ledit frein d'écrou (129) comporte sur une face externe une gorge (132) propre à recevoir un anneau élastique de blocage (115) destiné à coopérer avec une gorge (113) formée dans une face interne du support de palier (SP) pour placer ledit frein d'écrou (129) dans sa position d'immobilisation.

17. Utilisation du dispositif selon l'une des revendications précédentes pour la solidarisation d'un arbre (AIP) de turbomachine à un support de palier (SP).

18. Utilisation selon la revendication 17, **caractérisée en ce que** la turbomachine est un turbopropulseur.

## Patentansprüche

1. Vorrichtung (D) zur Fixierung einer Maschinenwelle (AIP) auf einem Lager (SP) mit einer Fördermutter (11, 118), die mit einem Gewinde (12, 119) versehen ist, das in der Lage ist, mit einem ersten Gewinde (1, 101) der Welle (AIP) zusammenzuwirken und einer Kontermutter (19, 124), die mit einem Gewinde (20, 125) versehen ist, das in der Lage ist, mit einem zweiten Gewinde (7, 107) des Lagers (SP) zusammenzuwirken, derart, dass die Welle bezüglich des Lagers in einer gewünschten Position fixiert ist, **dadurch gekennzeichnet, dass**:
• das erste (1, 101) und zweite (7, 107) Gewinde einander entgegengesetzt sind,
• die Gegenmutter (19, 124) einen Anschlag aufweist, der mit einer Vorderseite (23, 126) und ersten Kopplungseinrichtungen (22, 127) versehen ist,
• die Fördermutter (11, 118) zweite Kopplungseinrichtungen (17, 123) und einen Anschlag (13, 120) aufweist, der mit einer Vorderseite (15, 122), die dazu dient, sich auf eine Rückseite eines Anschlags (8, 108) des Lagers (SP) abzustützen, um die gewünschte Position zu definieren, und mit einer Rückseite versehen ist, an der die Vorderseite (23, 126) des Anschlags der Kontermutter (19, 124) anschlägt, wenn sie in eine Fixierungsposition gesetzt ist,
und dass sie eine Mutternbremse (24, 129) aufweist, die mit dritten (29) und vierten (26, 131) Kopplungseinrichtungen versehen ist, die so ausgebildet sind, dass sie mit der ersten (22, 127) bzw. zweiten (17, 123) Kopplungseinrichtung zusammenwirkt, derart, dass die Fördermutter (11, 118) und die Gegenmutter (19, 124) in der Drehung gekoppelt sind, wenn sie in eine Fixierungsposition gesetzt sind, die die gewählte Position definiert.

2. Vorrichtung nach Anspruch 1, **dadurch gekennzeichnet, dass** das Gewinde (12) der Fördermutter (11) auf eine Innenseite gesetzt ist, derart, dass es mit dem ersten Gewinde (1) zusammenwirkt, das auf eine Außenseite der Welle (AIP) gesetzt ist.

3. Vorrichtung nach Anspruch 2, **dadurch gekennzeichnet, dass** das Gewinde (20) der Gegenmutter (19) auf eine Innenseite gesetzt ist, derart, dass es mit dem zweiten Gewinde (7) des Lagers (SP) zusammenwirkt, das auf eine Außenseite gesetzt ist.

4. Vorrichtung nach Anspruch 2 oder 3, **dadurch gekennzeichnet, dass** die Mutternbremse (24) längsbeweglich auf der Fördermutter (11) angebracht ist.

5. Vorrichtung nach einem der Ansprüche 2 bis 4, **dadurch gekennzeichnet, dass** die Fördermutter (11) einen Endabschnitt (16) entgegengesetzt zum Anschlag (13) aufweist, und mit wenigstens zwei nach innen gekrümmten Greifern (17) versehen ist, und die zweiten Kopplungseinrichtungen bildet, und dass die Mutternbremse (24) einen ersten Endabschnitt (25) aufweist, der die vierten Kopplungseinrichtungen (26) bildet und derart angeordnet ist, dass er mit den Greifern (17) zusammenwirkt, um seine Drehkopplung mit der Fördermutter (11) sicherzustellen.

6. Vorrichtung nach Anspruch 5, **dadurch gekennzeichnet, dass** der erste Endabschnitt (25) eine Anschlaglasche (27) trägt, die dazu dient mit den Greifern (17) zusammenzuwirken, um im Falle der Demontage, das Lösen der Mutternbremse (24) von der Fördermutter (11) zu verhindern.

7. Vorrichtung nach Anspruch 5 oder 6, **dadurch gekennzeichnet, dass** die Greifer (17) eine Aufnahme definieren, die in der Lage ist, Blockierungseinrichtungen (18) aufzunehmen, die dazu dienen, die Mutternbremse (24) in ihre Fixierungsposition zu setzen.

8. Vorrichtung nach Anspruch 7, **dadurch gekennzeichnet, dass** die Blockierungseinrichtungen (18) in Form eines elastischen Verriegelungsblattes ausgebildet sind.

9. Vorrichtung nach einem der Ansprüche 2 bis 8, **dadurch gekennzeichnet, dass** die Gegenmutter (19) einen Endabschnitt (21) aufweist, der den genannten Abschnitt auf der der Vorderseite (23) entgegengesetzten Seite verlängert, und mit Zähnen (22) versehen ist, die die ersten Kopplungseinrichtungen bilden, und dass die Mutternbremse (24) einen zweiten Endabschnitt (28) aufweist, der mit Zähnen (29) versehen ist, die die dritte Kopplungseinrichtung bilden und so angeordnet sind, dass sie mit den Zähnen (22) der Gegenmutter (19) zusammenwirken, um ihre Drehkopplung mit der Gegenmutter (19) sicherzustellen.

10. Vorrichtung nach Anspruch 1, **dadurch gekennzeichnet, dass** das Gewinde (119) der Fördermutter (118) auf eine Außenseite gesetzt ist, derart, dass es mit dem ersten Gewinde (101) zusammenwirkt, das auf eine Innenseite der Welle (AIP) gesetzt ist.

11. Vorrichtung nach Anspruch 10, **dadurch gekennzeichnet, dass** das Gewinde (125) der Gegenmutter (124) auf eine Außenseite gesetzt ist, derart, dass es mit dem zweiten Gewinde (107) des Lagers (SP) zusammenwirkt, das auf eine Innenseite gesetzt ist.

12. Vorrichtung nach Anspruch 10 oder 11, **dadurch gekennzeichnet, dass** die Fördermutter (118) einen ersten Abschnitt aufweist, der mit dem Außengewinde (119) versehen ist, und einen zweiten Endabschnitt aufweist, der zum ersten Abschnitt bezüglich des Anschlags (120) entgegengesetzt angeordnet ist, und mit einer Außenseite der Greifer (123) versehen ist, die die zweite Kopplungseinrichtung bilden, und dass die Mutternbremse (129) einen ersten Endabschnitt (127) aufweist, der mit Greifern (131) versehen ist, die die vierte Kopplungseinrichtung bilden und derart angeordnet sind, dass sie mit den Greifern (123) der Fördermutter 118 zusammenwirken, um ihre Drehkopplung mit der Fördermutter (118) sicherzustellen.

13. Vorrichtung nach einem der Ansprüche 10 bis 12, **dadurch gekennzeichnet, dass** die Gegenmutter (124) einen Endabschnitt entgegengesetzt zum Anschlag (126) aufweist, und eine Innenseite aufweist, die mit Greifern (127) versehen ist, die die erste Kopplungseinrichtung bilden, und dass die Mutternbremse (129) einen ersten Endabschnitt (130) aufweist, der an seiner Außenseite mit Greifern versehen ist, die die dritte Kopplungseinrichtung bilden und derart angeordnet sind, dass sie mit den Greifern (127) der Gegenmutter (124) zusammenwirken, um ihre Drehkopplung mit der Gegenmutter (124) sicherzustellen.

14. Vorrichtung nach Anspruch 12 oder 13, **dadurch gekennzeichnet, dass** der erste Abschnitt (130) der Mutternbremse (129) derart angeordnet ist, dass er durch Längsbewegung zwischen den ersten Endabschnitt der Fördermutter (118) und dem Endabschnitt der Gegenmutter (124) eingeführt werden kann.

15. Vorrichtung nach einem der Ansprüche 12 bis 14, **dadurch gekennzeichnet, dass** die Mutternbremse (129) einen zweiten Endabschnitt entgegengesetzt zum ersten Endabschnitt (130) aufweist, und mit wenigstens einem Blockierungsanschlag (133) versehen ist, der dazu dient, mit einer Lasche (112) zusammenzuwirken, die auf dem Lager (SP) angebracht ist, um deren Weg im Falle der Demontage zu blockieren.

16. Vorrichtung nach einem der Ansprüche 10 bis 15, **dadurch gekennzeichnet, dass** die Mutternbremse (129) auf einer Außenseite eine Kerbe (132) aufweist, die dazu dient, einen elastischen Blockierungsring (115) aufzunehmen, der dazu dient, mit einer Kerbe (113) zusammenzuwirken, der in einer Innenseite des Lagers (SP) ausgebildet ist, um die Mutternbremse (129) in ihre Fixierungsposition zu setzen.

17. Verwendung der Vorrichtung nach einem der vorhergehenden Ansprüche für die Verbindung einer Welle (AIP) einer Turbomaschine mit einem Lager (SP).

18. Verwendung nach Anspruch 17, **dadurch gekennzeichnet, dass** die Turbomaschine ein Turboproptriebwerk ist.

## Claims

1. Device (D) for fixing an engine shaft (AIP) to a bearing support (SP) comprising an extraction nut (11, 118) equipped with a thread (12, 119) capable of cooperating with a first thread (1, 101) of the shaft (AIP) and a counternut (19, 124) equipped with a thread (20, 125) capable of cooperating with a second thread (7, 107) of the bearing support (SP), so as to immobilise the shaft relative to the bearing support in a selected position, **characterised in that**:
* the first (1, 101) and second (7,107) threads are inverse to one another,
* the counternut (19, 124) comprises a stop equipped with a front face (23, 126) and first coupling means (22, 127),
* the extraction nut (11, 118) comprises second coupling means (17, 123) and a stop (13, 120) equipped with a front face (15, 122) intended to bear on a rear face of a stop (8, 108) of the bearing support (SP) in order to define the selected position, and with a rear face with which the front face (23, 126) of the stop of the counternut (19, 124) comes into abutment when it is placed in an immobilisation position,
and **in that** it comprises a nut locking device (24, 129) equipped with third (29) and fourth (26, 131) coupling means contrived to cooperate with the first (22, 127) and second (17, 123) coupling means respectively so as to couple in rotation the extraction nut (11, 118) and the counternut (19, 124) once these are in an immobilisation position defining the selected position.

2. Device according to claim 1, **characterised in that** the thread (12) of the extraction nut (11) is placed on an inner face so as to cooperate with the first thread (1) placed on an external face of the shaft (AIP).

3. Device according to claim 2, **characterised in that** the thread (20) of the counternut (19) is located on an inner face so as to cooperate with the second thread (7) of the bearing support (SP) located on an outer face.

4. Device according to one of claims 2 or 3, **characterised in that** the nut locking device (24) is mounted translatably on the extraction nut (11).

5. Device according to one of claims 2 to 4, **characterised in that** the extraction nut (11) has an end part (16) opposite to the stop (13) and equipped with at least two claws (17) curved towards the interior and forming the second coupling means, and **in that** the nut locking device (24) has a first end part (25) forming the fourth coupling means (26) and being contrived to cooperate with the claws (17) in order to effect coupling in rotation to the extraction nut (11).

6. Device according to claim 5, **characterised in that** the first end part (25) carries a stop circlip (27) intended to cooperate with the claws (17) in order to prevent disconnection of the nut locking device (24) from the extraction nut (11) in the case of dismantling.

7. Device according to either of claims 5 or 6, **characterised in that** the claws (17) define a housing for receiving blocking means (18) intended to move the nut locking device (24) into its immobilisation position.

8. Device according to claim 7, **characterised in that** the blocking means (18) take the form of a locking spring washer.

9. Device according to one of claims 2 to 8, **characterised in that** the counternut (19) has an end part (21) extending the stop on the side opposite to its front face (23) and being equipped with teeth (22) forming the first coupling means, and **in that** the nut locking device (24) has a second end part (28) equipped with teeth (29) forming the third coupling means and being contrived to cooperate with the teeth (22) of the counternut (19) in order to effect its coupling in rotation with the counternut (19).

10. Device according to claim 1, **characterised in that** the thread (119) of the extraction nut (118) is located on an outer face so as to cooperate with the first thread (101) located on an inner face of the shaft (AIP).

11. Device according to claim 10, **characterised in that** the thread (125) of the counternut (124) is located on an outer face so as to cooperate with the second thread (107) of the bearing support (SP) located on an inner face.

12. Device according to either of claims 10 or 11, **characterised in that** the extraction nut (118) has a first end part equipped with the outer thread (119) and a second end part opposite the first part relative to the stop (120) and equipped on an outer face with slides (123) forming the second coupling means, and **in that** the nut locking device (129) has a first end part (127) equipped with slides (131) forming the fourth coupling means and being contrived to cooperate with the slides (123) of the extraction nut (118) in order to effect its coupling in rotation with the extraction nut (118).

13. Device according to one of claims 10 to 12, **characterised in that** the counternut (124) has an end part opposite to the stop (126) and having an inner face equipped with slides (127) forming the first coupling means, and **in that** the nut locking device (129) has a first end part (130) equipped on an outer face with slides forming the third coupling means and being contrived to cooperate with the slides (127) of the counternut (124) in order to effect its coupling in rotation with the counternut (124).

14. Device according to either of claims 12 or 13, **characterised in that** the first part (130) of the nut locking device (129) is contrived so as to be inserted by translation between the first end part of the extraction nut (118) and the end part of the counternut (124).

15. Device according to one of claims 12 to 14 **characterised in that** the nut locking device (129) comprises a second end part opposite to the first end part (130) and equipped with at least one blocking stop (133) intended to cooperate with a circlip (112) mounted on the bearing support (SP) in order to block its stroke in the case of dismantling.

16. Device according to one of claims 10 to 15, **characterised in that** the nut locking device (129) has on an outer face a groove (132) capable of receiving an elastic blocking ring (115) intended to cooperate with a groove (113) formed in an inner face of the bearing support (SP) in order to move the nut locking device (129) into its immobilisation position.

17. Use of the device according to one of the preceding claims for the fixing of a shaft (AIP) of a turbo engine to a bearing support (SP).

18. Use according to claim 17, **characterised in that** the turbo engine is a turboprop engine.
